# EUROPEAN PATENT SPECIFICATION

(11) **EP 1 565 821 B1**
(45) Date of publication and mention of the grant of the patent: **02.11.2006**
(21) Application number: 03769799.2
(22) Date of filing: 10.11.2003
(51) Int. Cl.: G06F 11/10

(54) **ELECTRONIC MEMORY COMPONENT OR MEMORY MODULE, AND METHOD OF OPERATING SAME**
ELEKTRONISCHES SPEICHERBAUELEMENT ODER SPEICHERMODUL, UND VERFAHREN ZUM BETREIBEN DESSELBEN
COMPOSANT DE MEMOIRE ELECTRONIQUE OU MODULE DE MEMOIRE ET PROCEDE D'EXPLOITATION ASSOCIE

(30) Priority: 21.11.2002 DE 10254324; 20.03.2003 EP 03100721
(43) Date of publication of application: 24.08.2005
(73) Proprietor: Philips Intellectual Property & Standards GmbH, 20099 Hamburg (DE); Koninklijke Philips Electronics N.V., 5621 BA Eindhoven (NL)
(72) Inventor: Ostertun, Soenke, Philips Intel Prop & Stand GmbH, 52066 Aachen (DE); Wagner, Mathias, Philips Intel Prop & Stand GmbH, 52066 Aachen (DE); Müller, Detlef, Philips Intel Prop & Stand GmbH, 52066 Aachen (DE); Buhr, Wolfgang, Philips Intel Prop & Stand GmbH, 52066 Aachen (DE); Garbe, Joachim Christoph Hans, 52066 Aachen (DE)
(74) Representative: Volmer, Georg
(86) International application number: PCT/IB2003/005106
(87) International publication number: WO 2004/046927

(56) References cited:
- EP-B- 0 307 958
- WO-A-02/086719
- US-A- 6 112 314
- US-A- 6 151 246

## Description

The present invention relates in general to the technical field of electronic components, in particular microelectronic components.

Specifically, the present invention relates to an electronic memory component or memory module, having at least one memory cell area in which physical states representing regular data are mapped by means of at least one mapping function that describes at least one error correction code, and at least one further physical state representing at least one exceptional or special state in the error correction code.

Specifically, the present invention furthermore relates to a method of operating at least one electronic memory component or memory module of the abovementioned type.

Electronic memory components, such as, for example,
- E[rasable]P[rogrammable]R[ead]O[nly]M[emories],
- E[lectrically]E[rasable]P[rogrammable]R[ead]O[nly]M[emories],
- Flash memories,
- R[ead]O[nly]M[emories] or
- R[andom]A[ccess]M[emories],
allow the programming and writing and/or reading of digital data of the form "1" and "0", which are often referred to as the written and erased state (bit), respectively. Occasionally, these data may be read erroneously due to wear, external influences or other causes.

This erroneous reading of the data may be counteracted for example by the use of an error correction code, in which the information is stored redundantly on the physical medium and an algorithm searches the data for errors while said data is being read in.

Typically, algorithms are used which can detect and/or correct one or more erroneous bits in a memory block of for example eight logic bits (which then correspond to more than eight physical bits). The correspondence between the physically stored bits P (= physical representation) of a memory block and the logically read bits K (= user representation) of the memory block is referred to as the mapping function A of the error correction code.

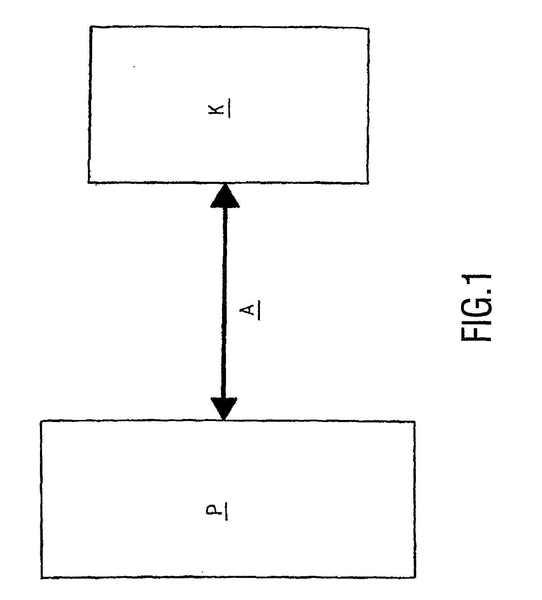

Fig. 1 shows, in the form of a schematic block diagram, the conventional connection according to the prior art, mediated by the mapping function A of the error correction code, between the physically implemented bits P and the bits K that are available to the user, which latter bits K have where necessary been error-corrected. Known examples of such error correction codes are Hamming codes.

A Hamming code is fundamentally an error correction code in which the difference in bit structure from character to character is particularly great, in order to maximize the probability of complete correction of the character in the event of erroneous data transmission. Using the Hamming code, in which check locations can be obtained from various parity checks, it is fundamentally possible to construct codes for correcting more than one error. In the Hamming code, only some of the information locations in the code word or data word are supplemented to give even parity.

However, the algorithm used for error correction can in practice, for reasons of efficiency and cost, never detect all errors that are possible in principle; rather, it is still limited to detecting and possibly correcting relatively few bits per memory block. This conventional error-tolerant encoding of data is not always sufficient in security-critical applications, particularly when some characteristic error patterns in the bits occur much more frequently than other error patterns or can be generated deliberately by external manipulation.

Therefore, for example when encoding the counter for the money entered on a prepaid money card, care must always be taken to ensure that the physically stable state, that is to say the state in which the data memory could tilt as a result of physical processes after a number of years, corresponds to an empty account status so that the prepaid money card cannot be recharged with more money in an unauthorized manner.

In the prior art, it is also not easy to distinguish unwritten memory blocks from memory blocks that have already been written to once before. This represents a potential security risk, for example in the smart card sector.

Prior art document EP 0 307 958 A2 discloses an intelligent card comprising an EEPROM (Electrically Erasable Programmable Read-Only Memory) device having a memory cell area comprising memory cells, each memory cell storing regular data therein using the conventional physical data storing states, i. e. "erased state" and "write state". Said regular data are stored by said conventional physical data storing states being mapped by means of an error correction code encoding/decoding means capable of correcting errors occuring in said regular data stored in said memory cells. Thereby each memory cell provides a further physical state, i. e. an "intermediate state" in which a memory cell voltage threshold lies outside the valid voltage threshold ranges for said conventional physical data storing states (i. e. "erased" state and "write" state). Moreover, said EEPROM comprises an "intermediate state" detection circuit being provided for detecting and signalling such "intermediate states" of any memory cell, the detected "intermediate states" of memory cells being input to said error correction code encoding/decoding means for detecting and correcting erroneous data.

Moreover, regarding the technological background of the present invention, reference can be made to prior art document US 6 151 246 revealing a multibit-per-cell nonvolatile memory dividing suitable threshold voltages of memory cells into ranges corresponding to allowed states for storage of data and ranges corresponding to forbidden zones indicating a data error. According to prior art document US 6 151 246 a refresh process includes reprogramming the threshold voltage into an allowed state. Error detection and correction codes can be used to identify data errors and generate corrected data for refresh operations.

On the basis of the above-described disadvantages and shortcomings, and in acknowledgement of the outlined prior art, it is an object of the invention to develop an electronic memory component or memory module of the type mentioned in the introduction, and a method, also of the type mentioned in the introduction, that is associated with this electronic memory component or memory module, such that on the one hand the error detection probability is considerably increased and on the other hand unwritten memory blocks can be reliably distinguished from memory blocks that have already been written to once before.

This object is achieved by an electronic memory component or memory module having the features indicated in Claim 1 and by a method having the features indicated in Claim 16. Advantageous arrangements and expedient developments of the present invention are characterized in the respective subclaims.

In accordance with the teaching of the present invention, a completely new approach to a microelectronic memory module (microelectronic memory component) with redundant data encoding for detecting and/or labeling invalid states, or states that are special in some other way, is hereby disclosed.

For this purpose, the mapping function that describes the error correction code, a Hamming code (= error correction code by means of which one erroneous bit within a data block can be corrected → what is known as single-error correction), has at least the specific property that, in addition to the mapping of all "normal" physical states representing the regular data, there is also in the memory at least one further physical state which represents an exceptional or special state and which can in any case be detected on the basis of its bit pattern, independently of whether only limited error detection or error correction is possible for the "normal" states, that is to say for the regular data, or of whether the error detection or error correction for the "normal" states is not limited.

This further physical state (or these further physical states) is (are) expediently selected such that unavoidable physical limitations of the memory medium are taken into account; thus, for example, in an EEPROM the state in which the memory cell transistors of any one bit are switched off and only leakage currents flow can be defined as a specific exceptional or special state. The implementation of the error correction code and the possible reactions to the various states can be effected in hardware or in software.

Using the above-described measures, it is possible for example to label a memory block as not yet written, by defining this state as a specific exceptional or special state in the error correction code. In the example of a prepaid money card, the physically stable state (which could be set after a number of years if no countermeasures are taken) may be defined as "unwritten".

In accordance with a preferred arrangement of the present invention, additionally all further physical states which can be generated in a relatively simple manner by manipulation of the memory, such as, for example, by irradiation with electromagnetic particles or waves, can be characterized as exceptional or special states in the error correction code. These states can then be detected unambiguously by the software and/or by the hardware of the prepaid money card, so that manipulations of the memory can be counteracted.

Security-related data or features of a chip can also be protected by means of essentially the same method, for example by said area being designed such that in normal operation no exceptional or special states can occur, but on the other hand for example the erasure of a memory block in this area generates an exceptional or special state.

This exceptional or special state in a security-related memory region which is preferably embedded in at least one doped receiving substrate can then be detected, and thus appropriate measures, such as a "hardware exception" or mode changes, can be performed by the controlling C[entral]P[rocessing]U[nit] in order to ensure the security of the entire memory content and chip. In a particularly advantageous manner, EEPROM fuses (for example configuration and trim values), which inter alia define the degree of locking of a smart card chip, can be protected using this technique.

In the context of the present invention, it is perfectly possible to deliberately write the memory blocks with an exceptional or special state, for example in order to label them as unwritten or, as in the case of the EEPROM, in order to quickly initialize a large number of blocks for the first time with "zero". This has the advantage that the subsequent write operation takes only half the time, since preinitialization is no longer required. In such a case, for example two different states corresponding to zero then exist, namely the exceptional or special state "erased" and the actual data item "zero"; in the read operation these two "zeros" behave differently.

An error detection probability that is increased in accordance with the invention is also highly significant with regard to detecting and monitoring potential attacks on the memory component or memory module, since in particular memory components or memory modules in security-related applications, such as chip cards, smart card controllers or the like, are frequently the target of various possible attacks.

Whereas in this connection "pure" security-related data can be protected and checked in a simple manner using (software) algorithms, protection and checking by means of (software) algorithms is not practical for executable program code, particularly in view of the sensitivity of executable program code with respect to modifications; even for any operating parameters or the like which may have been stored in the memory cell area, a software-based solution is not appropriate.

In principle, various attacks are conceivable which alter the content of the memory (or memory cell area) or manipulate the read operation in such a way that altered data or incorrect program commands are read. In order to increase the service life of memory components or memory modules, an error correction circuit is often used which makes it possible, for example, to detect and correct one-bit errors. Such an error correction circuit is also used, in a modified form, to detect a range of possible attacks, and this allows a reaction, for instance a deactivation, of the chip.

One possible attack is the illumination of the memory component or memory module by means of electromagnetic waves, in particular by means of light. As a countermeasure, for example, light sensors are integrated on the chip and the sensitive parts of the circuit, along with the memory cell area, are covered to the largest possible extent with metal, in order to prevent the illumination from having any effect. Additional bits which may be used explicitly as sensor, or read accesses performed at intervals without selection of a byte, are also conceivable.

The covering with metal does not prevent the memory component or memory module from being illuminated with light of a suitable wavelength through the substrate, that is to say "from behind". It is also conceivable that at high intensity the metal covering is no longer sufficient. Light sensors cover only parts of the chip surface; local illumination may thus possibly not be determined at all.

Additional bits considerably increase the surface area of the memory matrix or memory cell area, without increasing the local sensitivity compared with the particularly inventive development presented below. Additional read accesses may also detect attacks on individual bits, but are more unreliable in the case of disturbances varying over time due to the sequential performance of the two read accesses and double memory access time.

Accordingly, the present invention further relates to an error correction circuit provided for the additional "life-long" detection of possible attacks on the memory component or memory module (→ "local in-time validation" by means of the error correction code, namely by means of the Hamming code, in accordance with the present invention), implemented or integrated in at least one electronic memory component or memory module of the type mentioned above and/or operating in accordance with the method of the type mentioned above.

Since most potential attacks on memory components or memory modules cannot be focused at will, it is assumed, particularly on account of the small size of the memory cell area and on account of the metal covering which may lead to scattering of the disturbances, that possibly at least one entire byte is affected. If, expediently, it is ensured that all bits of a byte are placed very close next to one another, then, by expanding or modifying the error correction circuit, it can be made possible that relevant attacks are detected with very low expenditure.

Therefore, the Hamming code selected as error correction code, which is intended to enable the correction of one-bit errors in memory cells, requires a Hamming distance of 3, that is to say that each valid code word or data word must differ from any other code word or data word in at least three bits (if two binary words of the same length, for example bytes, are compared with one another, then, in accordance with DIN 44 300, the number of bits in which the two binary words of the same length differ from one another is what is referred to as the "Hamming distance"; this is used for error detection and error correction in that data units which have arrived via the transmission path are compared with valid characters; any necessary correction of the characters is effected in accordance with the probability principle).

A Hamming distance of 3 means that, for code words or data words having eight data bits, additionally at least four redundant bits are required (the data bits and the redundant bits together correspond, in a manner which is essential to the invention, to the physical states P, that is to say to the physical representation). In this connection, it is possible or expedient to select the Hamming code such that each valid twelve-bit code word or twelve-bit data word contains at least two set bits (= "1": state "high") and at least two erased bits (= "0": state "low").

Each valid twelve-bit code word or twelve-bit data word therefore has a minimum Hamming distance of 2 for special states in which all bits of a byte are set (= "1") (what is known as the "all-1 state" in relation to a code word or data word) or in which all bits of a byte are erased (= "0") (what is known as the "all-0 state" in relation to a code word or data word). Accordingly, data having one-bit errors can be unambiguously distinguished from these exceptional or special states which, according to the invention, are represented by the at least one further physical state and which in any case can be detected on the basis of their bit pattern.

When using an error correction code configured in such a way, it is possible for states in which all bits are set (= "1") (what is known as the "all-1 state") or in which all bits are erased (= "0") (what is known as the "all-0 state") to be interpreted as invalid states. The occurrence of such invalid states during reading of the data indicates an attack affecting the entire byte, such as, for example, an illumination of the memory cell or memory cell area or of the sense amplifiers, or else a completely erased (and not reprogrammed) memory cell.

According to a particularly advantageous development of the invention, it is possible to detect the exceptional or special states by means of at least one twelve-fold "and" operation (twelve-fold "and" gate, preferably having twelve inputs) or by means of at least one twelve-fold "nor" operation (twelve-fold "nor" gate, preferably having twelve inputs). In this connection care must be taken, when generating the error correction code, to ensure that the testability of the memory module or memory component according to the present invention is not negatively affected.

Since the testing also requires states in which all bits are set (= "1") (what is known as the "all-1 state") and in which all bits are erased (= "0") (what is known as the "all-0 state"), a changeover which allows these states is required in the test mode. Expediently, an error correction code is proposed in the present case which correctly continues important bit patterns in the test mode and fulfills the above-described requirements in the normal mode.
- Test mode:: redundant bit 3 = parity of the data bits 7,6,5,4,1
redundant bit 2 = parity of the data bits 7,6,3,2,0
redundant bit 1 = parity of the data bits 7,5,4,3,0
redundant bit 0 = parity of the data bits 6,4,3,2,1
- Normal mode:: redundant bit 3 = negated parity of the data bits 7,6,5,4,1
redundant bit 2 = negated parity of the data bits 7,6,3,2,0
redundant bit 1 = negated parity of the data bits 7,5,4,3,0
redundant bit 0 = negated parity of the data bits 6,4,3,2,1

In summary, it can be ascertained that the above-disclosed expansion or modification of the error correction circuit for the additional detection of possible attacks on the memory component or memory module combines a number of advantages, for instance
- high local sensitivity (one byte);
- correction of one-bit attacks (in the case of intact memory cells);
- independence of the time response of the read and write operations;
- no increase in access times;
- sensitivity to all attacks which affect all bits of a byte in the same way;
- no need to modify the memory matrix;
- very low expenditure for the implementation of the detection of exceptional and special states; and
- simple changeover between normal mode and test mode.

As regards the hardware configuration of the error correction circuit, the redundant bits computed or determined during regular programming (writing) may be physically stored in an inverted manner in the normal mode and in a noninverted manner in the test mode. Accordingly, in accordance with an advantageous development of the present error correction circuit, at least one computation unit intended for computing and/or determining redundant bits is provided, at least one multiplexing unit
- to which inverted redundant bits can be applied in the normal mode and/or
- to which noninverted redundant bits can be applied in the test mode being connected downstream of said computation unit.

This means that, during the programming or write operation, the additional necessary bits for the uncorrected user data corresponding to the user representation (= in reality the data bits) are initially expediently computed and/or determined by means of the computation unit provided for computing and/or determining redundant bits.

These additional necessary bits are preferably
- in the normal mode
   - inverted, that is to say negated, by means of an inverter unit connected upstream of that input of a multiplexing unit which is provided for the normal mode and
   - led via the input into the multiplexing unit and
- in the test mode
   - noninverted, that is to say nonnegated, and
   - led into the multiplexing unit via that input of said multiplexing unit which is provided for the test mode
and forwarded by the multiplexing unit as redundant bits.

After combining these redundant bits with the user data D, this combined data can be stored as physical data, that is to say can be physically stored.

In order now to detect the exceptional or special state in the error correction code within the context of the read operation, with regard to the hardware there may be provided, in a manner essential to the invention,
- at least one twelve-fold "and" gate to which the data bits and the redundant bits can be applied
   [→ interpretation of states in which all bits are set (= "1") (what is known as the "all-1 state") as invalid states] and/or
- at least one twelve-fold "nor" gate to which the data bits and the redundant bits can be applied
   [→ interpretation of states in which all bits are erased (= "0") (what is known as the "all-0 state") as invalid states].

According to an advantageous development of the present error correction circuit
- the redundant bits which are nonnegated in the test mode and/or
- the redundant bits which are negated in the normal mode (for this purpose at least one inverter unit I may expediently be connected upstream of that input of the multiplexing unit which is provided for the normal mode)
may be switched through by at least one multiplexing unit, to which the redundant bits can be applied, to at least one correction unit which is connected downstream of the multiplexing unit.

The correction unit computes or determines the expected redundant bits from the data bits and compares said expected redundant bits, which are independent of the (test or normal) mode, with the redundant bits which have been switched through by the multiplexing unit, said redundant bits being nonnegated in the test mode and negated in the normal mode. From this comparison, as is customary in the case of Hamming codes, any incorrect bit can be directly ascertained, and this enables direct correction by the correction unit.

The present invention furthermore relates to the use of at least one electronic memory component or memory module of the abovementioned type in order to detect and/or label invalid physical states or physical states that are special in some other way.

The present invention finally relates to the use of the method of the abovementioned type in order to implement at least one additional safety feature in at least one smart card, in particular in at least one smart card controller unit

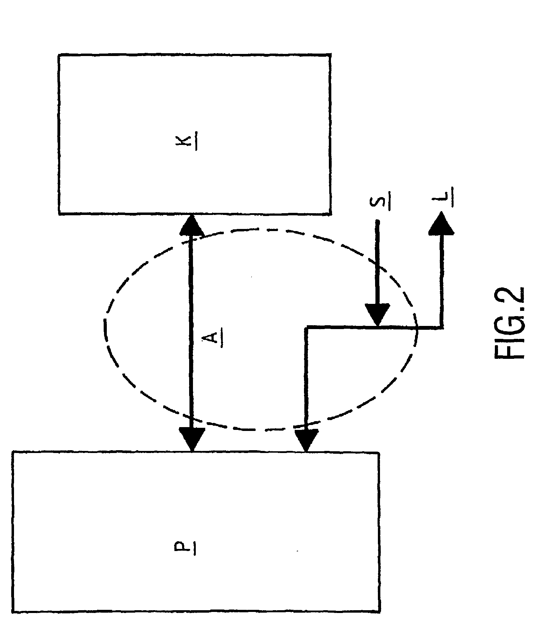

As explained above, there are various possibilities for advantageously configuring and developing the teaching of the present invention. For this purpose, on the one hand reference is made to the claims that are dependant on Claim 1 and Claim 16; on the other hand, further arrangements, features and advantages of the present invention will be explained in more detail below with reference to the example of embodiment illustrated in Figs. 2 to 4.

In the Figures:
Fig. 1 shows, in the form of a schematic block diagram, the conventional connection according to the prior art, mediated by the mapping function A of the error correction code, between the physically implemented bits and the bits that are available to the user, which latter bits have where necessary been error-corrected;
Fig. 2 shows, in the form of a schematic block diagram, an example of an embodiment of the expansion of the error correction code from Fig. 1 for detecting one or more exceptional or special states according to the present invention;

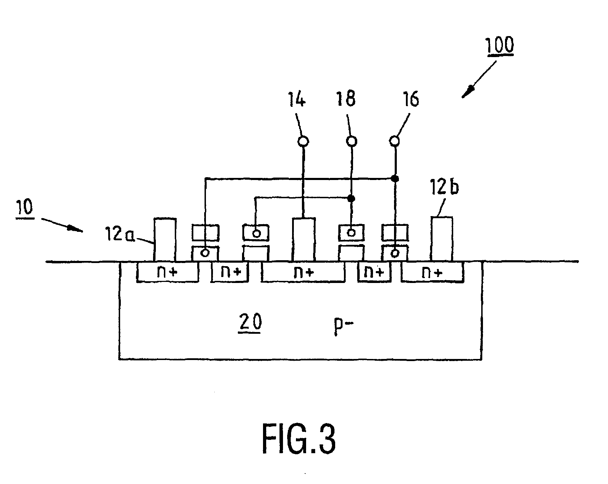

Fig. 3 shows, in the form of a schematic cross-sectional illustration which for reasons of clarity and visibility of the arrangements, elements or features is not to scale, an example of an embodiment of a microelectronic memory component or memory module according to the present invention;

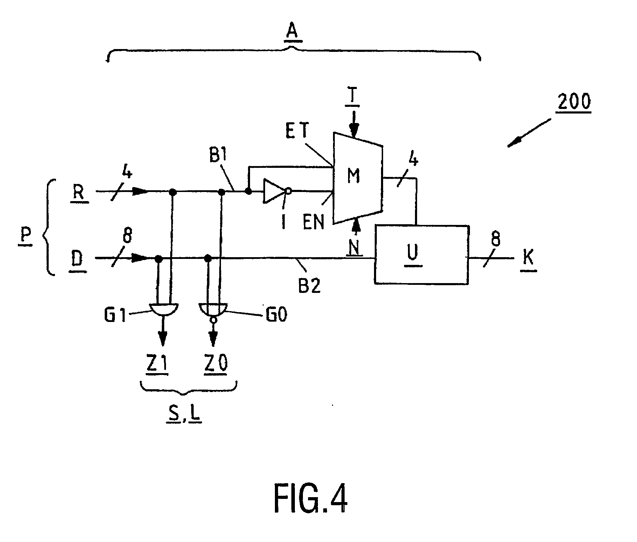

Fig. 4 shows, in the form of a schematic block diagram, an example of an embodiment of that part of an error correction circuit according to the present invention which is involved in the programming or write operation as well as in the read operation, said error correction circuit having been modified to detect potential attacks.

Identical or similar arrangements, elements or features bear the same references in Figs. 1 to 4.

Fig. 2 shows an example of an embodiment of a method of operating an electronic memory module 100 (or electronic memory component) as shown in Fig. 3. In this method, physical states P representing regular data are mapped by means of a mapping function A that describes an error correction code, namely a Hamming code.

As shown in Fig. 2, the error correction code is then expanded so that exceptional or special states S, L in the physical area can also be detected and reacted to appropriately. The user can thus, for example, program or write the physical memory (cell) area 10 with the exceptional or special state "erased" (→ reference S in Figs. 2 and 4). A subsequent read operation (→ reference L in Figs. 2 and 4) on the same memory area 10 then leads to a suitable exception or to a suitable special case, if this exceptional or special state has not in the meantime been rewritten with regular data. This forces the user to carry out a logically correct sequence of regular programming or write operations (→ reference S in Figs. 2 and 4) and read operations (→ reference L in Figs. 2 and 4).

The implementation as shown in Fig. 2 can also be used to detect an unauthorized external erasure for example of EPROM memory modules or EEPROM memory modules, for instance using U[ltra]V[iolet] light, as an exceptional or special state and to react to it accordingly.

As an alternative or in addition to this, the implementation as shown in Fig. 2 can also be used to deliberately generate exceptional or special states, in which the successful end of a financial transaction on a prepaid money card is only indicated once said states have been subsequently erased.

In summary, in relation to the method as shown in Fig. 2, it can be established that the error correction code is expanded, for example, in order also to detect one or more exceptional or special states. The error correction code programs or writes and reads the "normal" data of the user into/from the registers of the bits K, which have where necessary been error-corrected. However, the user also has the option to program or write an exceptional or special state himself. In any case, the user is informed, by means of a suitable signal, when he discovers an exceptional or special state on the physical bits P during the read operation.

The example of embodiment, shown in Fig. 3, of a microelectronic memory module 100 based on semiconductors is a flash memory module having a memory cell (matrix) 10 according to the present invention which is embedded in a p-doped receiving substrate 20 in the form of an HPW trough.

Assigned to this memory cell (matrix) 10 are two external sources 12a, 12b, a central bit line 14, a word line 16 arranged between bit line 14 and first source 12a or second source 12b, and a control gate 18 located between bit line 14 and word line.

In the memory module 100 shown, a high voltage is required to program or erase. In this connection, in order to keep the maximum voltage that has to be handled as low as possible, the programming voltage is divided into a positive fraction and a negative fraction. This leads to the situation where the p-doped receiving substrate 20, in which the memory cells 10 are formed, can also be connected to a negative potential.

Fig. 4 show is an example of an embodiment of an error correction circuit 200 designed in accordance with the present invention, which error correction circuit 200 is implemented and integrated in the microelectronic memory module 100 shown in Fig. 3 and is intended to detect potential light attacks, directed at the memory module 100, using the error correction code, specifically using the Hamming code, in accordance with the present invention (→ "local in-time validation for data integrity purposes, especially for security purposes"). In this connection, the error correction code, namely the Hamming code, is described by the mapping function A (cf. Figs. 2 and 4).

Since a potential illumination attack on the memory component or memory module 100 cannot be focused at will, it is assumed, particularly on account of the small size of the memory cell area (= memory cell matrix 10), that at least one entire byte is affected by such a light attack. If, then, it is ensured that all bits of a byte are placed very close next to one another, the error correction circuit 200 can be used to detect a corresponding illumination attack with relatively low expenditure.

Therefore, the Hamming code selected as error correction code, which enables the correction of one-bit errors in the memory cell area 10, requires a Hamming distance of 3, that is to say that each valid code word or data word differs from any other code word or data word in at least three bits. A Hamming distance of 3 means that, for eight-bit code words or eight-bit data words D (D0, D1, D2, D3, D4, D5, D6, D7), additionally at least four redundant bits R (R0, R1, R2, R3) are required.

In this connection, the Hamming code in the example of embodiment shown in Fig. 4 is selected such that each valid twelve-bit code word or twelve-bit data word resulting from the eight-bit code word or eight-bit data word D (D0, D1, D2, D3, D4, D5, D6, D7), including the four redundant bits R (R0, R1, R2, R3), contains at least two set bits (= "1": state "high") and at least two erased bits (= "0": state "low").

Therefore, each valid twelve-bit code word or twelve-bit data word has a minimum Hamming distance of 2 for special states in which all bits of a byte are set (= "1") (what is known as the "all-1 state" Z1; cf. Fig. 4) or in which all bits of a byte are erased (= "0") (what is known as the "all-0 state" Z0; cf. Fig. 4). Accordingly, data having one-bit errors can be unambiguously distinguished from these exceptional or special states S and L (cf. Figs. 2 and 4) which are represented by further physical states and which in any case are detected on the basis of their bit pattern.

When using the error correction code shown in Fig. 4, it is possible for states in which all bits are set (= "1") (what is known as the "all-1 state") or in which all bits are erased (= "0'') (what is known as the "all-0 state") to be interpreted as invalid states. The occurrence of such invalid states during reading of the data indicates an attack affecting the entire byte, such as, for example, an illumination of the memory cell or memory cell area 10 or of the sense amplifiers, or else a completely erased (and not reprogrammed) memory cell.

In the example of embodiment of the error correction circuit 200 shown in Fig. 4, the exceptional or special states S and L (cf. Figs. 2 and 4) are detected by means of a twelve-fold "and" operation and by means of a twelve-fold "nor" operation on the physically stored data P (= redundant bits R + data bits D).

Specifically, the twelve-fold "and" operation is implemented in the form of a twelve-fold "and" gate G1 which has twelve inputs, namely four inputs for the four redundant bits R (R0, R1, R2, R3) and eight inputs for the eight data bits D (D0, D1, D2, D3, D4, D5, D6, D7). Similarly, the twelve-fold "nor" operation is implemented in the form of a twelve-fold "nor" gate G0 which likewise has twelve inputs, namely four inputs for the four redundant bits R (R0, R1, R2, R3) and eight inputs for the eight data bits D (D0, D1, D2, D3, D4, D5, D6, D7).

In this connection, from the representation shown in Fig. 4 it can be seen that according to the present invention the four redundant bits R (R0, R1, R2, R3) and the eight data bits D (D0, D1, D2, D3, D4, D5, D6, D7) together correspond to the physically stored or physically implemented bits (= physical representation; cf. Fig. 2), that is to say to the physical states P representing the regular data.

With respect to the example of an embodiment shown in Figs. 2, 3, 4, the person skilled in the art of designing memory modules will know to take particular care to ensure, when generating the error correction code (cf. Fig. 2), that the testability of the memory module 100 (cf. Fig. 3) is not negatively affected by the expanded error correction circuit 200 (cf. Fig. 4), and this is done as follows:

Since the testing (↔ test mode T in a test unit or multiplexing unit M; cf. Fig. 4) also requires states in which all bits are set (= "1") (what is known as the "all-1 state" Z1; cf. Fig. 4) and in which all bits are erased (= "0") (what is known as the "all-0 state" Z0; cf. Fig. 4), a changeover which allows these states Z1 and Z0 is required in the test mode. For this reason, an error correction code is used which correctly continues important bit patterns in the test mode T and fulfills the above-described requirements in the normal mode N:
Test mode T:
   redundant bit R3 = parity of the fifth data bit D7, D6, D5, D4, D1
   redundant bit R2 = parity of the fifth data bit D7, D6, D3, D2, D0
   redundant bit R1 = parity of the fifth data bit D7, D5, D4, D3, D0
   redundant bit R0 = parity of the fifth data bit D6, D4, D3, D2, D1
Normal mode N:
   redundant bit R3 = negated parity of the fifth data bit D7, D6, D5, D4, D1
   redundant bit R2 = negated parity of the fifth data bit D7, D6, D3, D2, D0
   redundant bit R1 = negated parity of the fifth data bit D7, D5, D4, D3, D0
   redundant bit R0 = negated parity of the fifth data bit D6, D4, D3, D2, D1

Using the microelectronic memory module 100 (cf. Fig. 3), in particular using its memory cells (or memory cell matrix) 10, and using the error correction circuit 200 (cf. Fig. 4) implemented or integrated in the microelectronic memory module 100, the method shown in Fig. 2 can be implemented as follows:

In the representation shown in Fig. 4, during the programming or write operation S, the additional necessary bits for the user data, which at this point is naturally uncorrected, corresponding to the user representation K (= in reality the data bits D: D0, D1, D2, D3, D4, D5, D6, D7) are initially computed and/or determined by means of a computation unit provided for computing and/or determining redundant bits.

These additional necessary bits, led via a first data bus B1 of width 4, are
- in the normal mode N
   - inverted, that is to say negated, by means of an inverter unit I connected upstream of that input EN of a multiplexing unit M which is provided for the normal mode N and
   - led via the input EN into the multiplexing unit M and
- in the test mode T
   - noninverted, that is to say nonnegated, and
   - led into the multiplexing unit M via that input ET of said multiplexing unit M which is provided for the test mode T
and forwarded by the multiplexing unit M as redundant bits R: R0, R1, R2, R3.

After combining these redundant bits R with the user data D, which is led via a second data bus B2 of width 8, this combined data is stored as physical data P.

During the read operation L shown in Fig. 4, the multiplexing unit M, to which the four redundant bits R: R0, R1, R2, R3 can be applied via the first data bus B1 of width 4, switches
- in the test mode T the nonnegated redundant bits and
- in the normal mode the negated redundant bits
through to the correction unit U (cf. Fig. 4) which is connected downstream of the multiplexing unit M; for this purpose, an inverter unit I (cf. Fig. 4) is connected upstream of that input EN of the multiplexing unit M which is provided for the normal mode N. As a result, the physically stored redundant bits are switched through
- directly in the test mode T and
- in an "inverted-back" manner in the normal mode N
by the multiplexing unit M to the correction unit U.

In other words, this means that in the context of the read operation L the inverting by means of the inverter unit I and the multiplexing unit M is reversed; the correction unit U, which consequently "knows" nothing of the test mode T and normal mode N, computes and/or determines the expected redundant bits (as in the case of the write operation; cf. Fig. 4) from the data D (= physically stored data bits D0, D1, D2, D3, D4, D5, D6, D7) arriving via the second data bus B2 of width 8 and present at the correction unit U, and compares said expected redundant bits, which are independent of the (test or normal) mode, with the read redundant bits R which have been switched through by the multiplexing unit M, said read redundant bits R being nonnegated in the test mode T and negated in the normal mode N. From this comparison, as is customary in the case of Hamming codes, any erroneous bit can be directly ascertained, and this enables direct correction by the correction unit U.

As a result, (error-)corrected data K which is available to the user, that is to say the logically read bits (= user representation; cf. Figs. 2 and 4) therefore leave the correction unit U which is connected downstream of the multiplexing unit M, so that the present invention achieves the desired result by means of a limited and simple expansion of a conventional error correction circuit by the addition of the inverter unit I and the multiplexing unit M.

### LIST OF REFERENCES:

100 electronic memory component or memory module, in particular microelectronic memory component or memory module
10 memory cell area or memory cell matrix
12a first source
12b second source
14 bit line
16 word line
18 control gate
20 receiving substrate
200 error correction circuit
A mapping function of an error correction code
B1 first data bus, in particular with bus width 4, for the programming or write operation S as well as for the read operation L
B2 second data bus, in particular with bus width 8, for the programming or write operation S as well as for the read operation L
D eight data bits, namely
   - D0: zero data bit
   - D1: first data bit
   - D2: second data bit
   - D3: third data bit
   - D4: fourth data bit
   - D5: fifth data bit
   - D6: sixth data bit
   - D7: seventh data bit
EN input of the multiplexing unit M provided for the normal mode N
ET input of the multiplexing unit M provided for the test mode T
G0 twelve-fold "nor" gate
G1 twelve-fold "and" gate
I inverter unit
K user representation, in particular corrected data, namely corrected bits or logically read bits
L read operation: signal to user (second exceptional or special state)
M multiplexing unit
N normal mode
P physical representation:
   physical bits or physically stored bits
R four redundant bits, namely
   - R0: zero redundant bit
   - R1: first redundant bit
   - R2: second redundant bit
   - R3: third redundant bit
S programming or write operation by the user (first exceptional or special state)
T test mode
U correction unit
Z0 all-0 state, that is to say all bits of a byte are erased (= "0")
Z1 all-1 state, that is to say all bits of a byte are set (= "1")

## Claims

1. An electronic memory component or memory module (100), having
- at least one memory cell area (10) in which physical states (P) representing regular data are mapped by means of at least one mapping function (A) that describes at least one error correction code, and
- at least one further physical state representing at least one exceptional or special state (L, S) in the error correction code, where
- the error correction code is configured as at least one Hamming code, which
-- is designed for correcting one-bit errors in the memory cell area (10) and
-- has a Hamming distance of 3, so that each valid code word or data word differs from any other code word or data word in at least three bits, whereby
- for each eight-bit code word or data word (D: D0, D1, D2, D3, D4, D5, D6, D7), additionally at least four redundant bits (R: R0, R1, R2, R3) are provided, resulting in twelve-bit code words or data words.

2. The memory component or memory module as claimed in Claim 1, **characterized in that** the error correction code and/or the possible reactions to the various physical states are implemented using hardware and/or software.

3. The memory component or memory module as claimed in Claim 1 or 2, **characterized in that** the exceptional or special state (L, S) in the error correction code is given
- by the flow of leakage currents while memory cell transistors of any one bit are switched off;
- as a memory block or memory cell area (10) which has not yet been written;
- by manipulating the memory cell area (10), for example by irradiating the memory cell area (10) with electromagnetic particles or waves; and/or
- by the erasure of a memory block or memory cell area (10).

4. The memory component or memory module as claimed in any one of Claims 1 to 3, **characterized in that** the Hamming code is designed such that each valid twelve-bit code word or data word has
- at least two set bits (= "1") and/or
- at least two erased bits (= "0"),
- so that each valid twelve-bit code word or data word has a minimum Hamming distance of 2 for special states
- in which all bits of a byte are set (= "1") (Z1) or
- in which all bits of a byte are erased (= "0") (Z0).

5. The memory component or memory module as claimed in any one of Claims 1 to 4, **characterized in that** the four redundant bits (R: R0, R1, R2, R3)
- in a test mode (T), which also comprises states in which all bits of a byte are set (= "1") (Z1) or in which all bits of a byte are erased (= "0") (Z0), are selected as follows:
-- third redundant bit (R3) corresponds to parity
of the seventh data bit (D7),
of the sixth data bit (D6),
of the fifth data bit (D5),
of the fourth data bit (D4),
of the first data bit (D1);
-- second redundant bit (R2) corresponds to parity
of the seventh data bit (D7),
of the sixth data bit (D6),
of the third data bit (D3),
of the second data bit (D2),
of the zero data bit (D0);
-- first redundant bit (R1) corresponds to parity
of the seventh data bit (D7),
of the fifth data bit (D5),
of the fourth data bit (D4),
of the third data bit (D3),
of the zero data bit (D0);
-- zero redundant bit (R0) corresponds to parity
of the sixth data bit (D6),
of the fourth data bit (D4),
of the third data bit (D3),
of the second data bit (D2),
of the first data bit (D1); and/or
- in a normal mode (N) are selected as follows:
-- third redundant bit (R3) corresponds to negated parity
of the seventh data bit (D7),
of the sixth data bit (D6),
of the fifth data bit (D5),
of the fourth data bit (D4),
of the first data bit (D1);
-- second redundant bit (R2) corresponds to negated parity
of the seventh data bit (D7),
of the sixth data bit (D6),
of the third data bit (D3),
of the second data bit (D2),
of the zero data bit (D0);
-- first redundant bit (R1) corresponds to negated parity
of the seventh data bit (D7),
of the fifth data bit (D5),
of the fourth data bit (D4),
of the third data bit (D3),
of the zero data bit (D0);
-- zero redundant bit (R0) corresponds to negated parity
of the sixth data bit (D6),
of the fourth data bit (D4),
of the third data bit (D3),
of the second data bit (D2),
of the first data bit (D1).

6. The memory component or memory module as claimed in any one of Claims 1 to 5, **characterized in that** the data bits (D: D0, D1, D2, D3, D4, D5, D6, D7) and the redundant bits (R: R0, R1, R2, R3) together correspond to the physical states (P).

7. The memory component or memory module as claimed in any one of Claims 1 to 6, **characterized in that** the memory cell matrix (10) is assigned
- at least one source (12a, 12b),
- at least one bit line (14),
- at least one word line (16) and
- at least one control gate (18).

8. The memory component or memory module as claimed in any one of Claims 1 to 7, **characterized in that** the memory component or memory module (100) is configured
- as an E[rasable]P[rogrammable]R[ead]O[nly]M[emory],
- as an E[lectrically]E[rasable]P[rogrammable]R[ead]O[nly]M[emory],
- as a Flash memory,
- as a R[ead]O[nly]M[emory] or
- as a R[andom]A[ccess]M[emory].

9. The memory component or memory module as claimed in any one of Claims 1 to 8, **characterized by** an error correction circuit (200), being implemented or integrated in the electronic memory component or memory module (100).

10. The memory component or memory module as claimed in Claim 9, **characterized in**
- **that** the error correction circuit (200) comprises at least one computation unit which is provided for computing or determining redundant bits (R: R0, R1, R2, R3), and
- **that** at least one multiplexing unit (M)
- to which noninverted redundant bits can be applied in a test mode (T) and/or
- to which inverted redundant bits can be applied in a normal mode (N) is connected downstream of said computation unit.

11. The memory component or memory module as claimed in Claim 9 or 10, **characterized in that** the error correction circuit (200) comprises
- at least one twelve-fold "and" gate (G1) to which the data bits (D: D0, D1, D2, D3, D4, D5, D6, D7) and the redundant bits (R: R0, R1, R2, R3) can be applied and/or
- by at least one twelve-fold "nor" gate (G0) to which the data bits (D: D0, D1, D2, D3, D4, D5, D6, D7) and the redundant bits (R: R0, R1, R2, R3) can be applied for detecting the exceptional or special state (L, S) in the error correction code.

12. The memory component or memory module as claimed in any one of Claims 9 to 11, **characterized in that** the error correction circuit (200) comprises at least one multiplexing unit (M) to which the redundant bits (R: R0, R1, R2, R3) can be applied, which multiplexing unit is provided for switching
- in the test mode (T), the nonnegated redundant bits and/or
- in the normal mode (N), the negated redundant bits through to at least one correction unit (U) connected downstream of the multiplexing unit (M).

13. The memory component or memory module as claimed in Claims 10 or 12, **characterized in that** the error correction circuit (200) comprises at least one inverter unit (I) connected upstream of that input (EN) of the multiplexing unit (M) which is provided for the normal mode (N).

14. The memory component or memory module as claimed in Claims 12 or 13, **characterized in that** the correction unit (U) computes and/or determines the expected redundant bits from the data bits (D: D0, D1, D2, D3, D4, D5, D6, D7), and compares these expected redundant bits with the redundant bits (R: R0, R1, R2, R3) switched through by the multiplexing unit (M), said redundant bits (R: R0, R1, R2, R3) being nonnegated in the test mode (T) and negated in the normal mode (N).

15. The use of at least one electronic memory component or memory module (100) as claimed in any one of Claims 1 to 14 in order to detect and/or label invalid physical states or physical states that are special in some other way.

16. A method of operating at least one electronic memory component or memory module, in particular as claimed in at least one of Claims 1 to 14, in which by means of at least one mapping function (A) that describes at least one error correction code
- physical states (P) representing regular data are mapped and
- at least one further physical state in the form of at least one exceptional or special state (L, S) in the error correction code can be detected, encoded and/or indicated, whereby
- at least one Hamming code intended for correcting one-bit errors in the memory cell area (10) and having a Hamming distance of 3 is selected as the error correction code, so that each valid code word or data word differs from any other code word or data word in at least three bits, and wherby,
- for each eight-bit code word or data word (D: D0, D1, D2, D3, D4, D5, D6, D7), additionally at least four redundant bits (R: R0, R1, R2, R3) are provided, so that twelve-bit code words or data words are formed.

17. The method as claimed in Claim 16, **characterized in that** the further physical state can be detected, encoded and/or indicated on the basis of its bit pattern, even in the case of an error detection and/or correction operation which can be used only to a limited extent for the regular data.

18. The method as claimed in Claim 16 or 17, **characterized by** at least one redundant data encoding operation.

19. The method as claimed in any one of Claims 16 to 18, **characterized in that** the Hamming code is selected such that each valid twelve-bit code word or data word has
- at least two set bits (= "1 ") and/or
- at least two erased bits (= "0"),
- so that each valid twelve-bit code word or data word has a minimum Hamming distance of 2 for special states
- in which all bits of a byte are set (= "1") (Z1) or
- in which all bits of a byte are erased (= "0") (Z0).

20. The method as claimed in any one of Claims 16 to 19, **characterized**
- **by** at least one twelve-fold "and" operation to which the data bits (D: D0, D1, D2, D3, D4, D5, D6, D7) and the redundant bits (R: R0, R1, R2, R3) can be applied and/or
- by at least one twelve-fold "nor" operation to which the data bits (D: D0, D1, D2, D3, D4, D5, D6, D7) and the redundant bits (R: R0, R1, R2, R3) can be applied
- for detecting the exceptional or special state (L, S) in the error correction code.

21. The method as claimed in any one of Claims 16 to 20, **characterized in that** the four redundant bits (R: R0, R1, R2, R3)
- in a test mode (T), which also comprises states in which all bits of a byte are set (= "1") (Z1) or in which all bits of a byte are erased (= "0") (Z0), are selected as follows:
-- third redundant bit (R3) corresponds to parity
of the seventh data bit (D7),
of the sixth data bit (D6),
of the fifth data bit (D5),
of the fourth data bit (D4),
of the first data bit (D1);
-- second redundant bit (R2) corresponds to parity
of the seventh data bit (D7),
of the sixth data bit (D6),
of the third data bit (D3),
of the second data bit (D2),
of the zero data bit (D0);
-- first redundant bit (R1) corresponds to parity
of the seventh data bit (D7),
of the fifth data bit (D5),
of the fourth data bit (D4),
of the third data bit (D3),
of the zero data bit (D0);
-- zero redundant bit (R0) corresponds to parity
of the sixth data bit (D6),
of the fourth data bit (D4),
of the third data bit (D3),
of the second data bit (D2),
of the first data bit (D1); and/or
- in a normal mode (N) are selected as follows:
-- third redundant bit (R3) corresponds to negated parity
of the seventh data bit (D7),
of the sixth data bit (D6),
of the fifth data bit (D5),
of the fourth data bit (D4),
of the first data bit (D1);
-- second redundant bit (R2) corresponds to negated parity
of the seventh data bit (D7),
of the sixth data bit (D6),
of the third data bit (D3),
of the second data bit (D2),
of the zero data bit (D0);
-- first redundant bit (R1) corresponds to negated parity
of the seventh data bit (D7),
of the fifth data bit (D5),
of the fourth data bit (D4),
of the third data bit (D3),
of the zero data bit (D0);
-- zero redundant bit (R0) corresponds to negated parity
of the sixth data bit (D6),
of the fourth data bit (D4),
of the third data bit (D3),
of the second data bit (D2),
of the first data bit (D1).

22. The method as claimed in any one of Claims 16 to 21, **characterized in that** the data bits (D: D0, D1, D2, D3, D4, D5, D6, D7) and the redundant bits (R: R0, R1, R2, R3) together correspond to the physical states (P).

## Patentansprüche

1. Elektronisches Speicherbauelement oder Speichermodul (100) mit
- mindestens einem Speicherzellenbereich (10), in dem physische Zustände (P), die regelmäßige Daten darstellen, mit Hilfe mindestens einer Abbildungsfunktion (A) abgebildet werden, die mindestens einen Fehlerkorrekturcode beschreibt, und
- mindestens einem weiteren physischen Zustand, der mindestens einen außerordentlichen oder speziellen Zustand (L, S) in dem Fehlerkorrekturcode darstellt, wobei
- der Fehlerkorrekturcode als mindestens ein Hamming-Code konfiguriert ist, der
-- für das Korrigieren von Ein-Bit-Fehlern in dem Speicherzellenbereich (10) ausgelegt ist und
-- einen Hamming-Abstand von 3 hat, so dass sich jedes gültige Codewort oder Datenwort von jeglichem anderen Codewort oder Datenwort um mindestens drei Bits unterscheidet, wobei
- für jedes Acht-Bit-Codewort oder -Datenwort (D: D0,D1,D2,D3,D4,D5,D6,D7) zusätzlich mindestens vier redundante Bits (R: R0,R1,R2,R3) vorgesehen werden, wodurch sich Zwölf-Bit-Codewörter oder -Datenwörter ergeben.

2. Speicherbauelement oder Speichermodul nach Anspruch 1, **dadurch gekennzeichnet, dass** der Fehlerkorrekturcode bzw. die möglichen Reaktionen auf die verschiedenen physischen Zustände mit Hilfe von Hardware bzw. Software ausgeführt werden.

3. Speicherbauelement oder Speichermodul nach Anspruch 1 oder 2, **dadurch gekennzeichnet, dass** der außerordentliche oder spezielle Zustand (L, S) in dem Fehlerkorrekturcode gegeben ist durch
- das Fließen von Leckströmen, während die Speicherzellentransistoren von jeglichem Bit abgeschaltet sind,
- einen Speicherblock oder Speicherzellenbereich (10), der noch nicht beschrieben wurde,
- das Manipulieren des Speicherzellenbereichs (10), beispielsweise durch Bestrahlen des Speicherzellenbereichs (10) mit elektromagnetischen Teilchen oder Wellen, bzw.
- das Löschen eines Speicherblocks oder Speicherzellenbereichs (10).

4. Speicherbauelement oder Speichermodul nach einem der Ansprüche 1 bis 3, **dadurch gekennzeichnet, dass** der Hamming-Code so ausgelegt ist, dass jedes gültige Zwölf-Bit-Codewort oder -Datenwort Folgendes aufweist:
- mindestens zwei gesetzte Bits (= "1 ") bzw.
- mindestens zwei gelöschte Bits (= "0"),
- so dass jedes gültige Zwölf-Bit-Codewort oder -Datenwort einen Mindest-Hamming-Abstand von 2 für spezielle Zustände hat,
- bei denen alle Bits eines Bytes gesetzt (= "1") (Z1) sind oder
- bei denen alle Bits eines Bytes gelöscht (= "0") (Z0) sind.

5. Speicherbauelement oder Speichermodul nach einem der Ansprüche 1 bis 4, **dadurch gekennzeichnet, dass** die vier redundanten Bits (R: R0,R1,R2,R3)
- in einem Testbetrieb (T), der auch Zustände umfasst, bei denen alle Bits eines Bytes gesetzt (= "1") (Z1) sind oder bei denen alle Bits eines Bytes gelöscht (= "0") (Z0) sind, folgendermaßen ausgewählt werden:
-- das dritte redundante Bit (R3) entspricht der Parität
des siebten Datenbits (D7),
des sechsten Datenbits (D6),
des fünften Datenbits (D5),
des vierten Datenbits (D4),
des ersten Datenbits (D1),
-- das zweite redundante Bit (R2) entspricht der Parität (D7),
des siebten Datenbits
des sechsten Datenbits (D6),
des dritten Datenbits (D3),
des zweiten Datenbits (D2),
des nullten Datenbits (D0),
-- das erste redundante Bit (R1) entspricht der Parität
des siebten Datenbits (D7),
des fünften Datenbits (D5),
des vierten Datenbits (D4),
des dritten Datenbits (D3),
des nullten Datenbits (D0),
-- das nullte redundante Bit (R0) entspricht der Parität (D6),
des sechsten Datenbits
des vierten Datenbits (D4),
des dritten Datenbits (D3),
des zweiten Datenbits (D2),
des ersten Datenbits (D1), bzw.
- in einem Normalbetrieb (N) folgendermaßen ausgewählt werden:
-- das dritte redundante Bit (R3) entspricht der negierten Parität
des siebten Datenbits (D7),
des sechsten Datenbits (D6),
des fünften Datenbits (D5),
des vierten Datenbits (D4),
des ersten Datenbits (D1),
-- das zweite redundante Bit (R2) entspricht der negierten Parität
des siebten Datenbits (D7),
des sechsten Datenbits (D6),
des dritten Datenbits (D3),
des zweiten Datenbits (D2),
des nullten Datenbits (D0),
-- das erste redundante Bit (R1) entspricht der negierten Parität
des siebten Datenbits (D7),
des fünften Datenbits (D5),
des vierten Datenbits (D4),
des dritten Datenbits (D3),
des nullten Datenbits (D0),
-- das nullte redundante Bit (R0) entspricht der negierten Parität
des sechsten Datenbits (D6),
des vierten Datenbits (D4),
des dritten Datenbits (D3),
des zweiten Datenbits (D2),
des ersten Datenbits (D1).

6. Speicherbauelement oder Speichermodul nach einem der Ansprüche 1 bis 5, **dadurch gekennzeichnet, dass** die Datenbits (D: D0,D1,D2,D3,D4,D5,D6,D7) und die redundanten Bits (R: R0,R1,R2,R3) zusammen den physischen Zuständen (P) entsprechen.

7. Speicherbauelement oder Speichermodul nach einem der Ansprüche 1 bis 6, **dadurch gekennzeichnet, dass** die Speicherzellenmatrix (10)
- mindestens einer Quelle (12a, 12b),
- mindestens einer Bitleitung (14),
- mindestens einer Wortleitung (16) und
- mindestens einem Steuergatter (18)
zugeordnet ist.

8. Speicherbauelement oder Speichermodul nach einem der Ansprüche 1 bis 7, **dadurch gekennzeichnet, dass** das Speicherbauelement oder Speichermodul (100) konfiguriert ist
- als ein E[rasable]P[rogrammable]R[ead]O[nly]M[emory],
- als ein E[lectrically]E[rasable]P[rogrammable]R[ead]O[nly]M[emory],
- als ein Flash-Speicher,
- als ein R[ead]O[nly]M[emory] oder
- als ein R[andom]A[ccess]M[emory].

9. Speicherbauelement oder Speichermodul nach einem der Ansprüche 1 bis 8, **dadurch gekennzeichnet, dass** in dem elektronischen Speicherbauelement oder Speichermodul (100) eine Fehlerkorrekturschaltung (200) implementiert oder in ihm integriert ist.

10. Speicherbauelement oder Speichermodul nach Anspruch 9, **dadurch gekennzeichnet, dass**
- die Fehlerkorrekturschaltung (200) mindestens eine Recheneinheit umfasst, die für das Berechnen und Ermitteln von redundanten Bits (R: R0,R1,R2,R3) vorgesehen ist, und
- dass mindestens eine Multiplexeinheit (M),
- der in einem Testbetrieb (T) nicht invertierte redundante Bits zugeführt werden können bzw.
- in einem Normalbetrieb (N) invertierte redundante Bits zugeführt werden können, der genannten Recheneinheit nachgeschaltet wird.

11. Speicherbauelement oder Speichermodul nach Anspruch 9 oder 10, **dadurch gekennzeichnet, dass** die Fehlerkorrekturschaltung (200) Folgendes umfasst:
- mindestens ein zwölffaches UND-Gatter (G1), dem die Datenbits (D: D0,D1,D2,D3,D4,D5,D6,D7) und die redundanten Bits (R: R0,R1,R2,R3) zugeführt werden können bzw.
- mindestens ein zwölffaches NICHT-ODER-Gatter (G0), dem die Datenbits (D: D0,D1,D2,D3,D4,D5,D6,D7) und die redundanten Bits (R: R0,R1,R2,R3) zugeführt werden können,
zum Erkennen des außerordentlichen oder speziellen Zustands (L, S) in dem Fehlerkorrekturcode.

12. Speicherbauelement oder Speichermodul nach einem der Ansprüche 9 bis 11, **dadurch gekennzeichnet, dass** die Fehlerkorrekturschaltung (200) mindestens eine Multiplexeinheit (M) umfasst, der die redundanten Bits (R: R0,R1,R2,R3) zugeführt werden können, wobei die Multiplexeinheit so ausgelegt ist, dass sie
- im Testbetrieb (T) die nicht negierten redundanten Bits bzw.
- im Normalbetrieb (N) die negierten redundanten Bits
zu mindestens einer Korrektureinheit (U) durchschaltet, die der Multiplexeinheit (M) nachgeschaltet ist.

13. Speicherbauelement oder Speichermodul nach Anspruch 10 oder 12, **dadurch gekennzeichnet, dass** die Fehlerkorrekturschaltung (200) mindestens eine Invertereinheit (I) umfasst, die dem Eingang (EN) der Multiplexeinheit (M) vorgeschaltet ist, der für den Normalbetrieb (N) vorgesehen ist.

14. Speicherbauelement oder Speichermodul nach Anspruch 12 oder 13, **dadurch gekennzeichnet, dass** die Korrektureinheit (U) die erwarteten redundanten Bits aus den Datenbits (D: D0,D1,D2,D3,D4,D5,D6,D7) berechnet bzw. ermittelt und diese erwarteten redundanten Bits mit den redundanten Bits (R: R0,R1,R2,R3) vergleicht, die von der Multiplexeinheit (M) durchgeschaltet wurden, wobei die genannten redundanten Bits (R: R0,R1,R2,R3) im Testbetrieb (T) nicht negiert und im Normalbetrieb (N) negiert werden.

15. Verwendung von mindestens einem elektronischen Speicherbauelement oder Speichermodul (100) nach einem der Ansprüche 1 bis 14 zum Erkennen bzw. Kennzeichnen ungültiger physischer Zustände oder physischer Zustände, die auf eine andere Art speziell sind.

16. Verfahren zum Betreiben mindestens eines elektronischen Speicherbauelements oder Speichermoduls, insbesondere nach mindestens einem der Ansprüche 1 bis 14, bei dem durch mindestens eine Abbildungsfunktion (A), die mindestens einen Fehlerkorrekturcode beschreibt,
- physische Zustände (P), die regelmäßige Daten darstellen, abgebildet werden und
- mindestens ein weiterer physischer Zustand in Form von mindestens einem außerordentlichen oder speziellen Zustand (L, S) im Fehlerkorrekturcode erkannt, codiert bzw. angezeigt werden kann, wobei
- mindestens ein Hamming-Code zum Korrigieren von Ein-Bit-Fehlern in dem Speicherzellenbereich (10) und mit einem Hamming-Abstand von 3 als Fehlerkorrekturcode ausgewählt wird, so dass sich jedes gültige Codewort oder Datenwort um mindestens drei Bits von jeglichem anderen Codewort oder Datenwort unterscheidet, und wobei
- für jedes Acht-Bit-Codewort oder -Datenwort (D: D0,D1,D2,D3,D4,D5,D6,D7) zusätzlich mindestens vier redundante Bits (R: R0,R1,R2,R3) vorgesehen werden, so dass Zwölf-Bit-Codewörter oder -Datenwörter gebildet werden.

17. Verfahren nach Anspruch 16, **dadurch gekennzeichnet, dass** der weitere physische Zustand auf der Grundlage seines Bitmusters erkannt, codiert bzw. angezeigt werden kann, selbst im Fall eines Fehlererkennungs- bzw. -korrekturvorgangs, der lediglich in beschränktem Umfang für die regelmäßigen Daten verwendet werden kann.

18. Verfahren nach Anspruch 16 oder 17, **gekennzeichnet durch** mindestens einen Codiervorgang von redundanten Daten.

19. Verfahren nach einem der Ansprüche 16 bis 18, **dadurch gekennzeichnet, dass** der Hamming-Code so gewählt wird, dass jedes gültige Zwölf-Bit-Codewort oder - Datenwort Folgendes aufweist:
- mindestens zwei gesetzte Bits (= "1") bzw.
- mindestens zwei gelöschte Bits (= "0"),
- so dass jedes gültige Zwölf-Bit-Codewort oder -Datenwort einen Mindest-Hamming-Abstand von 2 für spezielle Zustände hat,
- bei denen alle Bits eines Bytes gesetzt (= "1") (Z1) sind oder
- bei denen alle Bits eines Bytes gelöscht (= "0") (Z0) sind.

20. Verfahren nach einem der Ansprüche 16 bis 19, **gekennzeichnet durch**
- mindestens eine zwölffache UND-Operation, der die Datenbits (D: D0,D1,D2,D3,D4,D5,D6,D7) und die redundanten Bits (R: R0,R1,R2,R3) zugeführt werden können bzw.
- mindestens eine zwölffache NICHT-ODER-Operation, der die Datenbits (D: D0,D1,D2,D3,D4,D5,D6,D7) und die redundanten Bits (R: R0,R1,R2,R3) zugeführt werden können,
- zum Erkennen des außerordentlichen oder speziellen Zustands (L, S) in dem Fehlerkorrekturcode.

21. Verfahren nach einem der Ansprüche 16 bis 20, **dadurch gekennzeichnet, dass** die vier redundanten Bits (R: R0,R1,R2,R3)
- in einem Testbetrieb (T), der auch Zustände umfasst, bei denen alle Bits eines Bytes gesetzt (="1") (Z1) sind oder bei denen alle Bits eines Bytes gelöscht (="0") (Z0) sind, folgendermaßen ausgewählt werden:
-- das dritte redundante Bit (R3) entspricht der Parität
des siebten Datenbits (D7),
des sechsten Datenbits (D6),
des fünften Datenbits (D5),
des vierten Datenbits (D4),
des ersten Datenbits (D1),
-- das zweite redundante Bit (R2) entspricht der Parität
des siebten Datenbits (D7),
des sechsten Datenbits (D6),
des dritten Datenbits (D3),
des zweiten Datenbits (D2),
des nullten Datenbits (D0),
-- das erste redundante Bit (R1) entspricht der Parität
des siebten Datenbits (D7),
des fünften Datenbits (D5),
des vierten Datenbits (D4),
des dritten Datenbits (D3),
des nullten Datenbits (D0),
-- das nullte redundante Bit (R0) entspricht der Parität
des sechsten Datenbits (D6),
des vierten Datenbits (D4),
des dritten Datenbits (D3),
des zweiten Datenbits (D2),
des ersten Datenbits (D1), bzw.
- in einem Normalbetrieb (N) folgendermaßen ausgewählt werden:
-- das dritte redundante Bit (R3) entspricht der negierten Parität
des siebten Datenbits (D7),
des sechsten Datenbits (D6),
des fünften Datenbits (D5),
des vierten Datenbits (D4),
des ersten Datenbits (D1),
-- das zweite redundante Bit (R2) entspricht der negierten Parität
des siebten Datenbits (D7),
des sechsten Datenbits (D6),
des dritten Datenbits (D3),
des zweiten Datenbits (D2),
des nullten Datenbits (D0),
-- das erste redundante Bit (R1) entspricht der negierten Parität
des siebten Datenbits (D7),
des fünften Datenbits (D5),
des vierten Datenbits (D4),
des dritten Datenbits (D3),
des nullten Datenbits (D0),
-- das nullte redundante Bit (R0) entspricht der negierten Parität
des sechsten Datenbits (D6),
des vierten Datenbits (D4),
des dritten Datenbits (D3),
des zweiten Datenbits (D2),
des ersten Datenbits (D1).

22. Verfahren nach einem der Ansprüche 16 bis 20, **dadurch gekennzeichnet, dass** die Datenbits (D: D0,D1,D2,D3,D4,D5,D6,D7) und die redundanten Bits (R: R0,R1,R2,R3) zusammen den physischen Zuständen (P) entsprechen

## Revendications

1. Composant de mémoire électronique ou module de mémoire (100), ayant
- au moins une zone de cellule mémoire (10) dans laquelle des états physiques (P) représentant des données ordinaires sont appliqués à l'aide d'au moins une fonction d'application (A) qui décrit au moins un code de correction d'erreur, et
- au moins un autre état physique représentant au moins un état exceptionnel ou spécial (L, S) dans le code de correction d'erreur, où
- le code de correction d'erreur est configuré au moins comme un code de Hamming, qui
-- est conçu pour corriger des erreurs d'un bit dans la zone de cellule de mémoire (10) et
-- a une distance de Hamming de 3, de sorte que chaque mot de code ou mot de données valide diffère de tout autre mot de code ou mot de données d'au moins 3 bits, ce par quoi
- pour chaque mot de code ou mot de données de 8 bits (D : D0, D1, D2, D3, D4, D5, D6, D7), au moins quatre bits redondants supplémentaires (R :R0, R1, R2, R3) sont prévus, pour donner des mots de code ou mots de données de douze bits.

2. Composant de mémoire ou module de mémoire selon la revendication 1, **caractérisé en ce que** le code de correction d'erreur et/ou les réactions possibles aux différents états physiques sont implémentés à l'aide de matériel et/ou de logiciel.

3. Composant de mémoire ou module de mémoire selon la revendication 1 ou 2, **caractérisé en ce que** l'état exceptionnel ou spécial (L, S) dans le code de correction d'erreur est donné
- par le flot des courants de fuite tandis que les transistors de la cellule mémoire pour un bit quelconque sont éteints ;
- comme un bloc mémoire ou zone de cellule mémoire (10) où rien n'a encore été écrit ;
- en manipulant la zone de cellule mémoire (10), par exemple en irradiant la zone de cellule mémoire (10) par des particules ou des ondes électromagnétiques ; et/ou
- par l'effacement d'un bloc mémoire ou zone de cellule mémoire (10).

4. Composant de mémoire ou module de mémoire selon l'une quelconque des revendication 1 à 3, **caractérisé en ce que** le code de Hamming est conçu de manière à ce que chaque mot de code ou mot de données valide de 12 bits a
- au moins deux bits mis à 1 (='1') et/ou
- au moins deux bits effacés (='0'),
- de sorte que chaque mot de code ou mot de données valide de 12 bits ait une distance de Hamming minimum de 2 pour les états spéciaux
- où tous les bits d'un octet sont mis à 1 (='1')(Z1) ou
- où tous les bits d'un octet sont effacés (='0')(Z0).

5. Composant de mémoire ou module de mémoire selon l'une quelconque des revendications 1 à 4, **caractérisé en ce que** les quatre bits redondants (R : R0, R1, R2, R3)
- dans un mode de test (T) qui comprend aussi des états dans lesquels tous les bits sont mis à 1 (='1')(Z1) ou dans lesquels tous les bits sont effacés (='0')(Z0), sont sélectionnés comme suit :
- le troisième bit redondant (R3) correspond à la parité
du septième bit de données (D7),
du sixième bit de données (D6),
du cinquième bit de données (D5),
du quatrième bit de données (D4),
du premier bit de données (D1) ;
- le deuxième bit redondant (R2) correspond à la parité
du septième bit de données (D7),
du sixième bit de données (D6),
du troisième bit de données (D3),
du deuxième bit de données (D2),
du bit de données zéro (D0) ;
- le premier bit redondant (R1) correspond à la parité
du septième bit de données (D7),
du cinquième bit de données (D5),
du quatrième bit de données (D4),
du troisième bit de données (D3),
du bit de données zéro (D0) ;
- le bit zéro redondant (R0) correspond à la parité
du sixième bit de données (D6),
du quatrième bit de données (D4),
du troisième bit de données (D3),
du deuxième bit de données (D2),
du premier bit de données (D1) ; et/ou
- dans un mode normal (N), sont sélectionnés comme suit :
- le troisième bit redondant (R3) correspond à la parité inversée du septième bit de données (D7),
du sixième bit de données (D6),
du cinquième bit de données (D5),
du quatrième bit de données (D4),
du premier bit de données (D1) ;
- le deuxième bit redondant (R2) correspond à la parité inversée
du septième bit de données (D7),
du sixième bit de données (D6),
du troisième bit de données (D3),
du deuxième bit de données (D2),
du bit de données zéro (D0) ;
- le premier bit redondant (R1) correspond à la parité inversée
du septième bit de données (D7),
du cinquième bit de données (D5),
du quatrième bit de données (D4),
du troisième bit de données (D3),
du bit de données zéro (D0) ;
- le bit zéro redondant (R0) correspond à la parité inversée
du sixième bit de données (D6),
du quatrième bit de données (D4),
du troisième bit de données (D3),
du deuxième bit de données (D2),
du premier bit de données (D1).

6. Composant de mémoire ou module de mémoire selon l'une quelconque des revendications 1 à 5, **caractérisé en ce que** les bits de données (D : D0, D1, D2, D3, D4, D5, D6, D7) et les bits redondants (R :R0, R1, R2, R3) ensemble correspondent aux états physique (P).

7. Composant de mémoire ou module de mémoire selon l'une quelconque des revendications 1 à 6, **caractérisé en ce que** à la matrice de cellule de mémoire (10) est assignée
- au moins une source (12a, 12b),
- au moins une ligne de bit (14),
- au moins une ligne de mot (16) et
- au moins une porte de commande (18).

8. Composant de mémoire ou module de mémoire selon l'une quelconque des revendications 1 à 7, **caractérisé en ce que** le composant de mémoire ou module de mémoire (100) est configuré
- comme une EPROM (E[rasable]P[rogrammable]R[ead]O[nly]M[emory] - Mémoire Morte Programmable Effaçable),
- comme une EEPROM (E[lectrically]E[rasable]P[rogrammable]R[ead]O[nly]M[emory] - Mémoire Morte Programmable Effaçable Electriquement),
- comme une mémoire Flash,
- comme une ROM (R[ead]O[nly]M[emory] - Mémoire Morte) ou
- comme une RAM (R[andom]A[cces]M[emory] - Mémoire Vive).

9. Composant de mémoire ou module de mémoire selon l'une quelconque des revendications 1 à 8, **caractérisé par** un circuit de correction d'erreur (200), étant implémenté ou intégré dans le composant de mémoire électronique ou module de mémoire (100).

10. Composant de mémoire ou module de mémoire selon la revendication 9, **caractérisé**
- **en ce que** le circuit de correction d'erreur (200) comprend au moins une unité de calcul qui est prévue pour calculer ou déterminer les bits redondants (R : R0, R1, R2, R3), et
- **en ce qu'**au moins une unité de multiplexage (M)
- à laquelle des bits redondants non inversés peuvent être appliqués dans un mode test (T) et/ou
- à laquelle des bits redondants inversés peuvent être appliqués dans un mode normal (N) est connectée en aval de ladite unité de calcul.

11. Composant de mémoire ou module de mémoire selon la revendication 9 ou 10, **caractérisé en ce que** le circuit de correction d'erreur (200) comprend
- au moins une porte duodécuple « ET » (G1) à laquelle les bits de données (D : D0, D1, D2, D3, D4, D5, D6, D7) et les bits redondants (R : R0, R1, R2, R3) peuvent être appliqués et/ou
- par au moins une porte duodécuple « NON-OU » (G0) à laquelle les bits de données (D : D0, D1, D2, D3, D4, D5, D6, D7) et les bits redondants (R : R0, R1, R2, R3) peuvent être appliqués pour détecter l'état exceptionnel ou spécial (L, S) dans le code de correction d'erreur.

12. Composant de mémoire ou module de mémoire selon l'une quelconque des revendications 9 à 11, **caractérisé en ce que** le circuit de correction d'erreur (200) comprend au moins une unité de multiplexage (M) à laquelle les bits redondants (R : R0, R1, R2, R3) peuvent être appliqués, laquelle unité de multiplexage est prévue pour commuter
- dans le mode test (T), les bits redondants non inversés et/ou
- dans le mode normal (N), les bits redondants inversés
vers au moins une unité de correction (U) connectée en aval de l'unité de multiplexage (M).

13. Composant de mémoire ou module de mémoire selon les revendications 10 ou 12, **caractérisé en ce que** le circuit de correction d'erreur (200) comprend au moins un inverseur (I) connecté en amont de cette entrée (EN) de l'unité de multiplexage (M) qui est prévue pour le mode normal (N).

14. Composant de mémoire ou module de mémoire selon les revendications 12 ou 13, **caractérisé en ce que** l'unité de correction (U) calcule et/ou détermine les bits redondants attendus à partir des bits de données (D : D0, D1, D2, D3, D4, D5, D6, D7), et compare ces bits redondants attendus avec les bits redondants (R : R0, R1, R2, R3) commutés par l'unité de multiplexage (M), lesdits bits redondants (R : R0, R1, R2, R3) étant non inversés dans le mode test (T) et inversés dans le mode normal (N).

15. Utilisation d'au moins un composant de mémoire électronique ou module de mémoire (100) selon l'une quelconque des revendications 1 à 14 afin de détecter et/ou d'étiqueter des états physiques incorrects ou des états physiques qui sont spéciaux d'une certaine autre façon.

16. Procédé pour faire fonctionner au moins un composant de mémoire électronique ou module de mémoire, en particulier selon l'une au moins des revendications 1 à 14, dans lequel au moyen d'au moins une fonction d'application (A) qui décrit au moins un code de correction d'erreur,
- des états physiques (P) représentant des données ordinaires sont appliqués et
- au moins un autre état physique sous la forme d'au moins un état exceptionnel ou spécial (L, S) dans le code de correction d'erreur peuvent être détectés, codés et/ou indiqués, par lequel
- au moins un code de Hamming destiné à la correction des erreurs d'un bit dans la zone de cellule de mémoire (10) et ayant une distance de Hamming de 3 est sélectionné comme code de correction d'erreur, de sorte que chaque mot de code ou mot de données valide diffère de tout autre mot de code ou mot de données d'au moins 3 bits, et par lequel,
- pour chaque mot de code ou mot de données de huit bits (D : D0, D1, D2, D3, D4, D5, D6, D7), au moins quatre bits redondants supplémentaires (R : R0, R1, R2, R3) sont prévus, de sorte que des mots de code ou mots de données de douze bits sont formés.

17. Procédé selon la revendication 16, **caractérisé en ce que** l'autre état physique peut être détecté, codé et/ou indiqué sur la base de son motif binaire, même dans le cas d'une détection d'erreur et/ou opération de correction qui peuvent être utilisées seulement dans certaines limites pour les données ordinaires.

18. Procédé selon la revendication 16 ou 17, **caractérisé par** au moins une opération de codage de données redondantes.

19. Procédé selon l'une quelconque des revendications 16 à 18, **caractérisé en ce que** le code de Hamming est sélectionné de sorte que chaque mot de code ou mot de données valide de douze bits a
- au moins deux bits mis à 1 (='1') et/ou
- au moins deux bits effacés (='0'),
- de sorte que chaque mot de code ou mot de données valide de douze bits a une distance de Hamming minimum de 2 pour les états spéciaux
- dans lesquels tous les bits d'un octet sont mis à 1(='1')(Z1) ou
- dans lesquels tous les bits d'un octet sont effacés (='0')(Z0).

20. Procédé selon l'une quelconque des revendications 16 à 19, **caractérisé**
- **par** au moins une duodécuple opération « ET » à laquelle les bits de données (D : D0, D1, D2, D3, D4, D5, D6, D7) et les bits redondants (R : R0, R1, R2, R3) peuvent être appliqués et/ou
- par au moins une duodécuple opération « NI-OU » à laquelle les bits de données (D : D0, D1, D2, D3, D4, D5, D6, D7) et les bits redondants (R : R0, R1, R2, R3) peuvent être appliqués
- pour détecter l'état exceptionnel ou spécial (L, S) dans le code de correction d'erreur.

21. Procédé selon l'une quelconque des revendications 16 à 20, **caractérisé en ce que** les quatre bits redondants (R : R0, R1, R2, R3)
- dans un mode test (T) qui comprend aussi des états dans lesquels tous les bits d'un octet sont mis à 1 (='1')(Z1) ou dans lesquels tous les bits d'un octet sont effacés (='0')(Z0), sont sélectionnés comme suit :
- le troisième bit redondant (R3) correspond à la parité
du septième bit de données (D7),
du sixième bit de données (D6),
du cinquième bit de données (D5),
du quatrième bit de données (D4),
du premier bit de données (D1) ;
- le deuxième bit redondant (R2) correspond à la parité
du septième bit de données (D7),
du sixième bit de données (D6),
du troisième bit de données (D3),
du deuxième bit de données (D2),
du bit de données zéro (D0) ;
- le premier bit redondant (R1) correspond à la parité
du septième bit de données (D7),
du cinquième bit de données (D5),
du quatrième bit de données (D4),
du troisième bit de données (D3),
du bit de données zéro (D0) ;
- le bit zéro redondant (R0) correspond à la parité
du sixième bit de données (D6),
du quatrième bit de données (D4),
du troisième bit de données (D3),
du deuxième bit de données (D2),
du premier bit de données (D1) ; et/ou
- dans un mode normal (N), sont sélectionnés comme suit :
- le troisième bit redondant (R3) correspond à la parité inversée
du septième bit de données (D7),
du sixième bit de données (D6),
du cinquième bit de données (D5),
du quatrième bit de données (D4),
du premier bit de données (D1) ;
- le deuxième bit redondant (R2) correspond à la parité inversée
du septième bit de données (D7),
du sixième bit de données (D6),
du troisième bit de données (D3),
du deuxième bit de données (D2),
du bit de données zéro (D0) ;
- le premier bit redondant (R1) correspond à la parité inversée
du septième bit de données (D7),
du cinquième bit de données (D5),
du quatrième bit de données (D4),
du troisième bit de données (D3),
du bit de données zéro (D0) ;
- le bit zéro redondant (R0) correspond à la parité inversée
du sixième bit de données (D6),
du quatrième bit de données (D4),
du troisième bit de données (D3),
du deuxième bit de données (D2),
du premier bit de données (D1).

22. Procédé selon l'une quelconque des revendications 16 à 21, **caractérisé en ce que** les bits de données (D : D0, D1, D2, D3, D4, D5, D6, D7) et les bits redondants (R : R0, R1, R2, R3) correspondent ensemble aux états physique (P).
